# EUROPÄISCHE PATENTANMELDUNG

(11) **EP 4 432 131 A1**
(43) Veröffentlichungstag der Anmeldung: **18.09.2024**
(21) Anmeldenummer: 24153581.4
(22) Anmeldetag: 24.01.2024
(51) Int. Cl.: G06F 16/93, G06F 21/62

(54) **VERFAHREN ZUM DURCHSUCHEN VON SENSIBLEN DOKUMENTEN UND SYSTEM HIERZU**

(30) Priorität: 15.03.2023 DE 102023106510
(71) Anmelder: Secunet Security Networks Aktiengesellschaft, 45138 Essen (DE)
(72) Erfinder: Lawatsch, Dominik, 47805 Krefeld (DE); Reuter, Stefan, 57482 Wenden (DE)
(74) Vertreter: Andrejewski - Honke Patent- und Rechtsanwälte Partnerschaft mbB

(57) **Zusammenfassung**

Die Erfindung betrifft ein Verfahren zum Durchsuchen von sensiblen Dokumenten, wobei eine elektronische Plattform (1) mehrere Clients (2) und vorzugsweise wenigstens einen Server (3) umfasst, wobei Text enthaltende Arbeitsdokumente (5, 15) im Rahmen der Plattform (1) erstellt bzw. in die Plattform (1) eingebunden werden, wobei die Arbeitsdokumente (5, 15) in einem menschenlesbaren Dateiformat gespeichert werden, wobei die Arbeitsdokumente (5, 15) im Rahmen der Plattform (1) automatisch jeweils wenigstens teilweise kopiert und umgewandelt werden und die umgewandelten Kopien Zwillingsdateien (7, 17) darstellen, wobei die Plattform (1) jedes Arbeitsdokument (5, 15) mit der entsprechenden Zwillingsdatei (7, 17) verknüpft, wobei das jeweilige Arbeitsdokument (5, 15) und die mit dem Arbeitsdokument (5, 15) verknüpfte Zwillingsdatei (7, 17) ein Dateipaar (8, 18) bilden, wobei die Suchmaschine (6) während des Suchvorgangs (20) auf wenigstens einen Teil der Zwillingsdateien (7, 17) zugreift und den Inhalt der Zwillingsdateien (7, 17) zur Erfüllung der Suchanfrage (20) durchsucht, wobei die Suchmaschine (6) eine auf aufgefundenen Zwillingsdateien (7, 17) beruhende Treffermenge (9) erstellt, wobei dem Nutzer (4) eine Ergebnismenge (11a, 11b) angezeigt wird, wobei die Ergebnismenge (11a, 11b) Arbeitsdokumente (5, 15) abbildet, wobei die abgebildeten Arbeitsdokumente (5, 15) der Ergebnismenge (11a, 11b) mit den aufgefundenen Zwillingsdateien (7, 17) der Treffermenge (9) verknüpft sind.

## Beschreibung

Die Erfindung betrifft ein Verfahren zum Durchsuchen von sensiblen Dokumenten, wobei eine elektronische Plattform mehrere Clients und vorzugsweise wenigstens einen Server umfasst, wobei die Nutzung der Plattform eine Zugangsberechtigung für Nutzer erfordert, wobei die Plattform Zugriff auf eine Menge an Dateien besitzt bzw. ermöglicht, wobei Text enthaltende Arbeitsdokumente im Rahmen der Plattform erstellt bzw. in die Plattform eingebunden werden und dann Bestandteil der Menge an Dateien werden, wobei die Arbeitsdokumente in einem menschenlesbaren Dateiformat gespeichert werden, wobei im Rahmen der Plattform eine Suchanfrage eines Nutzers an eine Suchmaschine der Plattform übermittelt wird und einen Suchvorgang der Suchmaschine auslöst, wobei die Suchmaschine Zugriff auf wenigstens eine Teilmenge der Menge an Dateien hat.

Ein Verfahren zum Durchsuchen von Dokumenten in einer Datenbank ist beispielsweise aus EP 2 210 198 B1 bekannt. In diesem Beispiel ist die Suchfunktion nur auf solche Nutzer beschränkt, welche eine Zugangsberechtigung - beispielsweise aufgrund eines zahlungspflichtigen Abonnements - besitzen. Diese Nutzer können ausnahmslos auf alle Dokumente bzw. Dateien zugreifen, die sie im Rahmen ihres Abonnements für einen Zugriff berechtigt. Eine Individualisierung ist häufig insofern möglich, als dass der Nutzer eine ausgewählte Anzahl an Datenbankpaketen in Form von thematisch gruppierten Modulen seines Interesses erwerben kann. Es ist grundsätzlich möglich aber aufgrund der Kosten eher selten, dass ein Nutzer Zugriff auf sämtliche Module einer Datenbank erhält.

Im Einzelfall kann der Nutzer von Datenbanken im Sinne von EP 2 210 198 B1 gegen ein entsprechendes Entgelt statt eines ganzen Moduls auch nur die Zugriffsberechtigung für ein einzelnes, bestimmtes Dokument erwerben, ohne dabei gleich ein ganzes Modul zu abonnieren. Bei diesem dokumentspezifischen Zugriff werden dem Nutzer meist zwar der Titel und die Zusammenfassung des jeweiligen Dokuments vorab angezeigt, ohne aber einen Zugriff auf den Volltext zu erhalten. Nach dem Bezahlvorgang steht dem Nutzer schließlich der Volltext des ausgesuchten Dokuments zur Verfügung. In jedem Fall aber bestimmt hier der Nutzer mit Hilfe des aufgewendeten Entgelts, auf welche Dokumente bzw. Dateien er Zugriff erhält.

Nachteilig an den bekannten Verfahren ist, dass es insbesondere nicht auf Dokumentenmengen bzw. Dateimengen anwendbar ist, die zum Teil als vertraulich bzw. geheim eingestufte Dokumente/Dateien umfassen. Diese sensiblen Dokumente/Dateien in der Datenbank sollen für einige Nutzer aufgrund ihrer Nutzerrolle niemals einsehbar sein. Gleichzeitig kann es andere Nutzer geben, die zwar keine generelle, dafür aber eine fallspezifische Zugriffsberechtigung aufgrund des Need-to-know-Prinzips (auch: Erforderlichkeitsprinzip, "Kenntnis nur, wenn nötig") für die sensiblen Dokumente/Dateien innehaben. Dritte Nutzer schließlich haben, bezogen auf ein bestimmtes Dokument bzw. auf eine bestimmte dazugehörige Akte, eine generelle Zugriffsberechtigung. Die dritten Nutzer sind in der Regel für die jeweilige Akte verantwortlich und üben daher - bezogen auf diese Akte bzw. auf die dazugehörigen Dokumente /Dateien - ihre Rolle als jeweils Aktenverantwortlicher bzw. Zugriffsberechtigter aus.

Probleme in der Praxis ergeben sich hauptsächlich im Bereich der fallspezifischen Zugriffsberechtigung und damit vor allem bei der Abwägung von Suchinteresse einerseits und Geheimhaltungsinteresse andererseits. Die fallspezifische Zugriffsberechtigung hängt von der Relevanz der Tätigkeit des suchenden Nutzers ab und von dem Bedeutungsgehalt der Informationen für diese Tätigkeit, die in dem konkreten Dokument enthalten sind. Die Zugriffsberechtigung kann auch von der Nutzerrolle abhängen, die den Nutzern beispielsweise vom Arbeit- oder Gesetzgeber zugewiesen wurde.

Bei der Tätigkeit des suchenden Nutzers kann es sich beispielsweise um eine geheimdienstliche Ermittlungstätigkeit handeln, die in die Zuständigkeit des Nutzers fällt. Ist die Bedeutung des Sucherfolgs des Nutzers groß, so kann dieses Suchinteresse das Geheimhaltungsinteresse sogar von Akten mit höchstem Geheimhaltungsgrad überwiegen. Dann erteilt der Zugriffsberechtigte bzw. Aktenverantwortliche dem Nutzer eine wie auch immer geartete Zugriffsberechtigung für die Akte bzw. ein bestimmtes Dokument bzw. einen Teil eines Dokuments. Dabei wird je nach Situation zwischen einem Lese- und einem Schreibzugriff unterschieden. Es ist daher nicht zweckmäßig ein Suchsystem in der Datenbank einzurichten, welches den suchenden Nutzer im Falle von Akten mit einer bestimmten Geheimhaltungsstufe von vornherein ausschließt. Folglich soll die Datenbank in der Lage sein, Suchen über alle oder wenigstens sehr viele sensible Dokumente hinweg durchzuführen.

Die Vielzahl an sensiblen, durchsuchbaren Dokumenten weckt das Interesse Dritter. Es kommt bekanntermaßen immer wieder zu erfolgreichen Hackerangriffen auf Unternehmen, Nichtregierungsorganisationen und staatliche Einheiten, wobei hier vor allem Erpressungsversuche eine gewisse mediale Reichweite erlangen. Wesentlich seltener tritt jedoch der bloße, oft fortlaufende "Datendiebstahl" bzw. das unerlaubte Kopieren von nicht ausreichend geschützten Daten (Ausleiten von Daten) in mediale Erscheinung, weil hier das Interesse an den Daten selbst besteht. In der Folge bemerken die betroffenen Organisationen zumeist nichts vom Ausleiten der Daten, weil die Täter dauerhaft Einblick in die Daten haben wollen und sich entsprechend unauffällig verhalten. Im Zuge der wachsenden Möglichkeiten der Cyberkriminalität ist es daher von erheblicher Bedeutung, auch dem Ausleiten von sensiblen Daten, insbesondere im Falle von Datenbanken mit Suchmaschinen, einen adäquaten Schutz entgegen zu setzen.

Der Erfindung liegt daher die Aufgabe zugrunde, ein Verfahren zum Durchsuchen von sensiblen Dokumenten anzugeben, bei welchem die Sicherheit - vor allem der Schutz vor Datenausleitung - weiter erhöht wird. Insbesondere liegt der Erfindung die Aufgabe zugrunde, ein Verfahren zum Durchsuchen von sensiblen Dokumenten anzugeben, welches dem Need-to-know-Prinzip gerecht wird.

Diese Aufgabe wird gelöst durch ein Verfahren zum Durchsuchen von sensiblen Dokumenten, wobei eine elektronische Plattform mehrere Clients und vorzugsweise wenigstens einen Server umfasst, wobei die Nutzung der Plattform eine Zugangsberechtigung für Nutzer erfordert, wobei die Plattform Zugriff auf eine Menge an Dateien besitzt bzw. ermöglicht, wobei Text enthaltende Arbeitsdokumente im Rahmen der Plattform erstellt bzw. in die Plattform eingebunden werden und dann Bestandteil der Menge an Dateien werden, wobei die Arbeitsdokumente in einem menschenlesbaren Dateiformat gespeichert werden, wobei im Rahmen der Plattform eine Suchanfrage eines Nutzers an eine Suchmaschine der Plattform übermittelt wird und einen Suchvorgang der Suchmaschine auslöst, wobei die Suchmaschine Zugriff auf wenigstens eine Teilmenge der Menge an Dateien hat,

wobei die Arbeitsdokumente im Rahmen der Plattform automatisch jeweils wenigstens teilweise kopiert und umgewandelt werden und die umgewandelten Kopien Zwillingsdateien darstellen, wobei die Plattform jedes Arbeitsdokument mit der entsprechenden Zwillingsdatei verknüpft, wobei das jeweilige Arbeitsdokument und die mit dem Arbeitsdokument verknüpfte Zwillingsdatei ein Dateipaar bilden, wobei die Suchmaschine während des Suchvorgangs - insbesondere lediglich - auf wenigstens einen Teil der Zwillingsdateien zugreift und den Inhalt der Zwillingsdateien zur Erfüllung der Suchanfrage durchsucht, wobei die Suchmaschine eine auf aufgefundenen Zwillingsdateien beruhende Treffermenge - vorzugsweise in Form einer Trefferliste - erstellt, wobei dem Nutzer eine Ergebnismenge - vorzugsweise in Form einer Ergebnisliste - angezeigt wird, wobei die Ergebnismenge Arbeitsdokumente abbildet, wobei die abgebildeten Arbeitsdokumente der Ergebnismenge mit den aufgefundenen Zwillingsdateien der Treffermenge verknüpft sind.

Der Erfindung liegt zunächst die Erkenntnis zugrunde, dass die bekannten Datenbanksysteme zum Durchsuchen der Menge an Dokumenten die Dokumente konzentriert sammeln. Hierzu umfassen die Datenbanksysteme wenigstens einen bzw. zumeist mehrere Server, auf welchem bzw. welchen die Dokumente konzentriert gelagert sind. Dies ermöglicht eine schnelle und effektive Suche. Aufgrund der Konzentration sensibler Dokumente auf einem oder mehreren Servern handelt es sich bei den Servern um kritische technische Infrastruktur mit entsprechend großer Schutzbedürftigkeit. Dies gilt umso mehr, als dass diese sensiblen Dokumentsammlungen nicht nur für gewöhnliche Kriminelle, sondern auch für Geheimdienste mit entsprechenden Möglichkeiten für Cyberattacken von Interesse sein können.

Es wurde gefunden, dass die Erstellung von Zwillingsdateien mit nur maschinenlesbaren Dateiformaten den Informationsschutz deutlich erhöht, wobei gleichzeitig eine hohe Praktikabilität gewährleistet wird. Die Zwillingsdateien erlauben in der schlussendlichen Risikoabwägung dann durchaus eine Konzentration, welche eine schnelle und effektive Suche und damit die hohe Praktikabilität ermöglicht. Die vorzugsweise nur maschinenlesbaren Dateiformate stellen eine zusätzliche Hürde für potentielle Angreifer dar, so dass die Sicherheit des Datenbanksystems weiter erhöht wird und insbesondere dem Need-to-know-Prinzip Rechnung getragen werden kann. Die Erzeugung von Zwillingsdateien ermöglicht es unter anderem, die noch sensibleren Arbeitsdokumente verteilt bzw. dezentral zu speichern, so dass deren Ausleitung deutlich erschwert wird.

Der Erfindung liegt weiter die Erkenntnis zugrunde, dass zwar grundsätzlich auf Zwillingsdateien verzichtet werden könnte, so dass nur die Arbeitsdokumente vorliegen. Dann aber sind die Arbeitsdokumente entweder dezentral gespeichert und stellen erhebliche Barrieren für die vorzunehmenden Suchvorgänge dar. Oder aber die Arbeitsdokumente sind zentral gespeichert und bergen in diesem Fall ein erhebliches Sicherheitsrisiko. Umgekehrt könnte die Plattform auch so ausgebildet sein, dass nur die Zwillingsdateien in der Form vorliegen, dass die Arbeitsdokumente weitgehend oder vollständig aus den Zwillingsdateien rekonstruierbar sind. Bei jedem Dokumentenaufruf müsste dann die teilweise sehr rechenaufwändige Rekonstruktion durchgeführt werden, was die Leistungsfähigkeit der Plattform deutlich verringern kann. Zudem enthielten die Zwillingsdateien alle relevanten Informationen und würden dadurch wiederum ein Sicherheitsrisiko in sich tragen. Die Gratwanderung zwischen Praktikabilität einerseits und Sicherheit andererseits wird somit durch das gleichzeitige Vorhandensein von Arbeitsdokumenten und Zwillingsdateien bewältigt. Im Ergebnis wird die eingangs genannte Aufgabe gelöst.

Der Ausdruck "Plattform" meint vorzugsweise ein System mit mehreren Rechnern, wobei vorteilhafterweise die Plattformen wenigstens einen Server umfasst. Die Plattform kann insbesondere durch eine Software definiert sein, so dass die Software den Server bzw. die Clients definiert. Die Plattform kann innerhalb einer Behörde/eines Gebäudes befindlich sein. Es ist möglich, dass die Plattform sich über mehrere Behörden oder mehrere Gebäude erstreckt.

Ganz besonders vorzugsweise wird die Plattform bzw. werden die an der Plattform beteiligten Rechner/Clients/Server durch ein System von Zugangsberechtigungen gesichert. Es ist bevorzugt, dass nur Nutzer mit einem Nutzerkonto die Plattform nutzen können bzw. eine Zugangsberechtigung besitzen.

Die Zugangsberechtigung kann insbesondere durch ein Geheimnis ausgedrückt werden und z.B. in Form eines einzugebenden Benutzernamens nebst Passwort oder biometrischer Eingabe dargestellt werden. Zweckmäßigerweise ist die Kenntnis des Geheimnisses der Zugangsberechtigung zwecklos, sofern der Rechner/Client/Server nicht von der Plattform umfasst ist. Es ist bevorzugt, dass eine Zugangsberechtigung gleichbedeutend ist mit einem Nutzerkonto auf der Plattform. Zweckmäßigerweise kann wenigstens eine Untermenge der Arbeitsdokumente im Volltext ausschließlich über die Nutzung der Plattform eingesehen werden.

Vorzugsweise werden den Nutzern der Plattform Nutzerrollen zugewiesen. Vorteilhafterweise ist die Nutzerrolle in einem Nutzerkonto des Nutzers hinterlegt. Es ist von Vorteil, dass die Nutzerrolle von einer Hierarchieposition des Nutzers abhängig ist. Vorzugsweise wird wenigstens einigen der Arbeitsdokumente bzw. Dateipaare ein Geheimhaltungsgrad zugeordnet. Es ist ganz besonders bevorzugt, dass eine generelle Zugriffsberechtigung eines Nutzers auf ein Arbeitsdokument von einem Geheimhaltungsgrad des Arbeitsdokuments abhängt. Es ist von Vorteil, dass eine Zugriffsberechtigung eines Nutzers auf ein Arbeitsdokument von einer Nutzerrolle des Nutzers abhängt.

Der Ausdruck "Arbeitsdokument" meint vorzugsweise Dateiformate, die Text aufweisen. Der Text kann über die Darstellung des Inhalts des Dateiformats an einem Rechner direkt für Menschen ersichtlich sein. Der Text kann aber auch Bestandteil eines Fotos sein und in dem Dateiformat für Menschen nicht sichtbar oder in einer bestimmten Darstellungsweise für Menschen nicht sichtbar in dem Dateiformat hinterlegt sein. Ganz besonders bevorzugt umfassen die Arbeitsdokumente einen von Rechnern durchsuchbaren Text im Bereich der Nutzdaten bzw. außerhalb des Dateiheaders bzw. Dateifooters. Es ist bevorzugt, dass die Arbeitsdokumente dem Nutzer wenigstens einen Lesezugriff und vorzugsweise in einigen Fällen einen Schreibzugriff bieten. Mit Vorteil sind einige der Arbeitsdokumente durch wenigstens einen oder mehrere Nutzer änderbar. Es ist möglich, dass einige der Arbeitsdokumente unveränderbar ausgebildet sind und lediglich einen - wenn überhaupt - Lesezugriff bieten. Beispielhafte Dateiformate für Arbeitsdokumente sind Word-Dateien oder PDF-Dateien. Weitere Beispiele für Arbeitsdokumente können Fotos mit eingebettetem sichtbarem oder nicht sichtbarem, aber durchsuchbarem Text sein.

Der Begriff "Zwillingsdatei" meint vorzugsweise eine Datei, welche wenigstens bzw. lediglich einen Bruchteil der Informationen des Arbeitsdokuments enthält. Es ist möglich, dass die Zwillingsdatei sämtliche Informationen des Arbeitsdokuments umfasst. Gemäß einer Ausführungsform kann das Arbeitsdokument bzw. der Text des Arbeitsdokuments vollständig aus der Zwillingsdatei rekonstruierbar sein. Gemäß einer Ausführungsform ist das Arbeitsdokument bzw. der Text des Arbeitsdokuments nur unvollständig aus der Zwillingsdatei rekonstruierbar. Zweckmäßigerweise kann eine Zwillingsdatei stets aus einem/dem Arbeitsdokument heraus erzeugt werden.

Der Ausdruck "verknüpft" bzw. "Verknüpfung" meint vorzugsweise, dass das jeweilige Arbeitsdokument - wie auch immer - dem entsprechenden Zwillingsdokument zugeordnet ist. Diese Zuordnung kann zum Beispiel über eine Liste bzw. einen Index vorgenommen werden und ist vorzugsweise über wenigstens einen Schutzmechanismus, beispielsweise über eine Verschlüsselung, gesichert. Mit Vorteil hat keiner der Nutzer und vorzugsweise auch kein Administrator einen Zugriff auf die Zuordnung.

Es ist bevorzugt, dass eine Änderung eines Arbeitsdokuments bzw. eine Speicherung des geänderten Arbeitsdokuments eine automatische Erzeugung einer geänderten Zwillingsdatei bzw. eine automatische Änderung einer Zwillingsdatei auslöst. Vorzugsweise ersetzt die geänderte Zwillingsdatei eine ältere, nicht die Änderung umfassende Zwillingsdatei. Es ist bevorzugt, dass zu einem Arbeitsdokument eine Zwillingsdatei und vorzugsweise lediglich eine Zwillingsdatei existiert.

Gemäß einer bevorzugten Ausführungsform gleicht die Plattform die Zwillingsdateien der Treffermenge mit einer Zugriffsberechtigung des Nutzers ab, wobei die Ergebnismenge dem Nutzer diejenigen Informationen aus der Treffermenge vorenthält, zu denen der Nutzer keine generelle bzw. fallspezifische Zugriffsberechtigung besitzt. Wenn der Nutzer zwar keine generelle Zugriffsberechtigung besitzt, so kann er immer noch eine fallspezifische Zugriffsberechtigung auf die vorenthaltenen Informationen besitzen. Sofern die Plattform nur solche Informationen dem Nutzer vorenthält, zu denen er keine generelle Zugriffsberechtigung besitzt, so kann das Vorenthalten dieser Informationen lediglich vorläufig sein und im Zuge einer späteren Zugriffsentscheidung noch widerrufen werden.

Sofern die Plattform selbst abgleicht, ob der Nutzer eine fallspezifische Zugriffsberechtigung besitzt, so ist bevorzugt, dass die Plattform dem Nutzer die vorenthaltenen Informationen nicht nur vorläufig, sondern dauerhaft vorenthält. Es ist bevorzugt, dass die Treffermenge für den Nutzer unsichtbar ist. Mit Vorteil ist die Treffermenge einer Anzahl an Zwillingsdateien zugeordnet. Zweckmäßigerweise ist die Ergebnismenge einer Anzahl an Arbeitsdokumenten zugeordnet. Es ist besonders bevorzugt, dass die Anzahl an Zwillingsdateien der Treffermenge größer oder gleich der Anzahl an Arbeitsdokumenten der Ergebnismenge ist. Es ist sehr bevorzugt, dass die Differenz zwischen der Anzahl der Zwillingsdateien der Treffermenge und der Anzahl der Arbeitsdokumente der Ergebnismenge jenen Dateipaaren bzw. Arbeitsdokumenten entspricht, zu denen der Nutzer keine generelle bzw. fallspezifische Zugriffsberechtigung hat.

Es ist sehr bevorzugt, dass ein bezüglich der vorenthaltenen Informationen Zugriffsberechtigter und/oder die Plattform eine Zugriffsentscheidung treffen muss bzw. trifft, ob dem Nutzer der Zugriff auf einige oder alle der vorenthaltenen Informationen bzw. auf einige oder alle der Informationen der Treffermenge gewährt wird. Zweckmäßigerweise wird dem Nutzer - im Falle eines vorläufigen Vorenthaltens - durch den Zugriffsberechtigten Zugriff auf einige oder alle der vorenthaltenen Informationen gewährt, wenn der Nutzer eine entsprechende fallspezifische Zugriffsberechtigung besitzt. Zweckmäßigerweise wird - im Falle eines dauerhaften Vorenthaltens - dem Nutzer durch die Plattform der Zugriff auf einige oder alle der Informationen der Treffermenge verweigert. Mit Vorteil trifft der Zugriffsberechtigte, bevorzugt im Rahmen der Plattform, die Zugriffsentscheidung. Es ist bevorzugt, dass der Zugriffsberechtigte - nach dem vorläufigen Vorenthalten der Informationen durch die Plattform - über die fallspezifische Zugriffsberechtigung im Rahmen der Zugriffsentscheidung entscheidet. Es ist zweckmäßig, dass im Falle der Zugriffsentscheidung durch die Plattform die Zugriffsentscheidung gefällt wird, bevor die Ergebnismenge erstellt wird. Zweckmäßigerweise wird im Falle der Zugriffsentscheidung durch den Zugriffsberechtigten die Zugriffsentscheidung nach dem Erstellen der Ergebnismenge gefällt.

Es ist möglich, dass die Ergebnismenge bzw. Ergebnisliste so ausgebildet ist, dass der Nutzer erkennt, dass ihm Informationen in der Ergebnismenge/Ergebnisliste vorenthalten werden. Es ist möglich, dass die Ergebnismenge/Ergebnisliste so ausgebildet ist, dass der Nutzer nicht erkennen kann, dass ihm Informationen vorenthalten werden. Gemäß einer Ausführungsform übermittelt der Nutzer bzw. das Nutzerkonto des Nutzers der Plattform neben einer Suchanfrage des Nutzers auch zu der Suchanfrage gehörige Rahmendaten. Die Rahmendaten können beispielsweise einen Geheimhaltungsgrad einer Akte aufweisen, innerhalb derer die Suchanfrage vorgenommen wird. Die Rahmendaten können insbesondere eine Nutzerrolle und/oder eine Tätigkeitsbeschreibung umfassen. Die Tätigkeitsbeschreibung kann so ausgebildet sein, dass sie die Tätigkeit innerhalb der Akte beschreibt, zu welcher die Suchanfrage vorgenommen wurde. Die Tätigkeitsbeschreibung kann insbesondere in Form einer Auswahlliste ausgebildet sein. Hierdurch wird dem Zugriffsberechtigten bzw. der Plattform ermöglicht, die Wichtigkeit der Suchanfrage einzuordnen. Dies erlaubt schlussendlich die Abwägung des Geheimhaltungsinteresses am Arbeitsdokument bzw. an den vorenthaltenen Informationen gegenüber dem Suchinteresse des Nutzers. Durch die Rahmendaten wird insbesondere eine Zugriffsentscheidung durch die Plattform selbst ermöglicht. Die Rahmendaten erleichtern darüber hinaus dem Zugriffsberechtigten die Zugriffsentscheidung.

Vorzugsweise informiert die Plattform den Zugriffsberechtigten über die Suchanfrage des Nutzers, woraufhin der Zugriffsberechtigte eine Zugriffsentscheidung fällen kann bzw. muss. Gemäß einer bevorzugten Ausführungsform kann durch den Nutzer bzw. den Zugriffsberechtigten bzw. die Plattform ein bevorzugt anonymisierter Chat zwischen dem Nutzer und dem Zugriffsberechtigten aufgebaut werden. Innerhalb dieses Chats können der vorzugsweise anonymisierte Nutzer und der vorzugsweise anonymisierte Zugriffsberechtigte miteinander erörtern, ob das Suchinteresse das Geheimhaltungsinteresse überwiegt. Es ist von Vorteil, dass der Chat innerhalb der Plattform für Dritte, beispielsweise für Vorgesetzte des Nutzers bzw. des Zugriffsberechtigten, einsehbar ist bzw. bleibt. Dies dient insbesondere dazu, dass der Nutzer bzw. der Zugriffsberechtigte nicht zu einer übertriebenen Darstellung des jeweils eigenen Interesses neigen.

Gemäß einer sehr bevorzugten Ausführungsform werden die Zwillingsdateien in einem nur maschinenlesbaren Dateiformat gespeichert. Vorzugsweise ist der Text eines Arbeitsdokuments aus der dazugehörigen Zwillingsdatei heraus nicht vollständig rekonstruierbar. Mit Vorteil ist die Umwandlung von der Kopie des Arbeitsdokuments hin zur Zwillingsdatei mit einem wenigstens teilweisen Informationsverlust des Arbeitsdokuments bzw. des Textes des Arbeitsdokuments verbunden. Es ist möglich, dass das Arbeitsdokument aus der Zwillingsdatei nur so unvollständig rekonstruierbar ist, dass der rekonstruierte Text für Mensch und Maschine unverständlich ist. Es ist bevorzugt, dass die Zwillingsdatei eine mathematische Repräsentation des Arbeitsdokuments bzw. des Textes des Arbeitsdokuments ist. Die mathematische Repräsentation ist mit Vorteil eine Vektorrepräsentation des Arbeitsdokuments bzw. des Textes des Arbeitsdokuments. Es ist bevorzugt, dass die Zwillingsdateien aus den Arbeitsdokumenten heraus in der Form rekonstruierbar sind, dass zwar der Text vollständig rekonstruiert wird, aber Formatierungen und/oder Tabellen und/oder Bilder verloren gehen.

Gemäß einer besonders vorteilhaften Ausgestaltung der Erfindung umfasst die Suchmaschine eine künstliche Intelligenz - insbesondere in Form eines neuronalen Netzes - und ist vorzugsweise dazu ausgebildet Kontextsuchen durchzuführen. Es ist sehr bevorzugt, dass die Suchmaschine bzw. die künstliche Intelligenz bzw. das neuronale Netz eine Architektur aus dem Bereich des *Natural Language Processings*, insbesondere eine Transformer-Architektur, aufweist.

Es ist von Vorteil, dass den Arbeitsdokumenten und/oder den Zwillingsdateien bzw. den Dateipaaren Metadaten zugeordnet sind. Es ist bevorzugt, dass die Metadaten einen Geheimhaltungsgrad des Arbeitsdokuments bzw. der Zwillingsdatei umfassen. Vorzugsweise kann die Plattform Metadaten des Arbeitsdokuments auf die zugeordnete Zwillingsdatei wenigstens teilweise übertragen. Vorteilhafterweise werden die übertragenen Metadaten der Zwillingsdatei wenigstens in Teilen kryptographisch gesichert. Es ist bevorzugt, dass die kryptographisch gesicherten Metadaten der Zwillingsdatei Informationen über Zugriffsberechtigungen umfassen. Die Übertragung der Metadaten auf die Zwillingsdatei ermöglicht bzw. erleichtert es der Plattform insbesondere, eine von der Treffermenge unterschiedliche Ergebnismenge zu erstellen.

Gemäß einer besonders bevorzugten Ausführungsform ist wenigstens eine Untermenge der Zwillingsdateien in einem Dokumententresor gespeichert. Mit Vorteil ist der Dokumententresor im Vergleich zu anderen Speicherbereichen der Plattform bzw. des Servers durch wenigstens einen weiteren Schutzmechanismus geschützt. Vorzugsweise nutzt wenigstens ein Teil des Dokumententresors Speicherbereiche des Servers. Mit Vorteil sind die Suchmaschine und/oder die Zwillingsdateien bzw. der Dokumententresor über wenigstens ein Firewall gegenüber dem Internet abgeschirmt. Es ist bevorzugt, dass die Zwillingsdateien im Rahmen der elektronischen Plattform jeweils kryptographisch gesichert, insbesondere homomorph verschlüsselt, sind. Es ist sehr bevorzugt, dass der Suchvorgang der Suchmaschine in den Zwillingsdateien für den Nutzer nicht einsehbar ist. Vorzugsweise erstellt die Suchmaschine während des Suchvorgangs einen Suchraum mit einer Untermenge an Zwillingsdateien aus dem Dokumententresor. Es ist möglich, dass der Suchvorgang bzw. der Suchraum nach Übermittlung der Treffermenge bzw. der Ergebnismenge - vorzugsweise rückstandslos - gelöscht wird.

Es ist ganz besonders bevorzugt, dass wenigstens einige der Arbeitsdokumente dezentral, insbesondere auf einem dem Nutzer zugewiesenen Client, gespeichert werden. Es ist von Vorteil, dass Arbeitsdokumente aus den Akten, für die der Nutzer verantwortlich ist, auf dem Client bzw. wenigstens in Teilen auf dem Client des Nutzers gespeichert werden. Es ist bevorzugt, dass der Nutzer zu den Arbeitsdokumenten auf seinem Client nicht nur eine Zugriffsberechtigung mit einem Leserecht, sondern wenigstens teilweise auch mit einem Schreibrecht besitzt.

Es ist von Vorteil, dass die Verknüpfung eines Arbeitsdokuments mit einer dazugehörigen Zwillingsdatei durch Indexierung, beispielsweise mit Hilfe einer fortlaufenden Indexnummer, vorgenommen wird. Vorzugsweise ist jedem Arbeitsdokument bzw. jeder Zwillingsdatei bzw. jedem Dateipaar ein eindeutiges - insbesondere ein eineindeutiges - Indexzeichen, insbesondere eine fortlaufende Indexnummer, zugeordnet.

Die eingangs genannte Aufgabe wird gelöst durch ein System zum Durchsuchen von sensiblen Dokumenten, wobei das System eine elektronische Plattform umfasst, wobei die Plattform mehrere Clients und vorzugsweise wenigstens einen Server aufweist, wobei das System so ausgebildet ist, dass die Nutzung der Plattform eine Zugangsberechtigung für Nutzer erfordert, wobei die Plattform Zugriff auf eine Menge an Dateien besitzt bzw. ermöglicht, wobei Text enthaltende Arbeitsdokumente im Rahmen der Plattform erstellbar bzw. in die Plattform einbindbar sind und dann Bestandteil der Menge an Dateien sind, wobei die Arbeitsdokumente in einem menschenlesbaren Dateiformat gespeichert werden, wobei im Rahmen der Plattform eine Suchanfrage eines Nutzers an eine Suchmaschine der Plattform übermittelbar ist und einen Suchvorgang der Suchmaschine auslöst, wobei die Suchmaschine Zugriff auf wenigstens eine Teilmenge der Menge an Dateien hat,

wobei das System so ausgebildet ist, dass die Arbeitsdokumente im Rahmen der Plattform automatisch jeweils wenigstens teilweise kopiert und umgewandelt werden und die umgewandelten Kopien Zwillingsdateien darstellen, wobei die Plattform jedes Arbeitsdokument mit der entsprechenden Zwillingsdatei verknüpft, wobei das jeweilige Arbeitsdokument und die mit dem Arbeitsdokument verknüpfte Zwillingsdatei ein Dateipaar bilden, wobei die Suchmaschine während des Suchvorgangs - insbesondere lediglich - auf wenigstens einen Teil der Zwillingsdateien zugreift und den Inhalt der Zwillingsdateien zur Erfüllung der Suchanfrage durchsucht, wobei die Suchmaschine eine auf aufgefundenen Zwillingsdateien beruhende Treffermenge - vorzugsweise in Form einer Trefferliste - erstellt, wobei dem Nutzer eine Ergebnismenge - vorzugsweise in Form einer Ergebnisliste - angezeigt wird, wobei die Ergebnismenge Arbeitsdokumente abbildet, wobei die abgebildeten Arbeitsdokumente der Ergebnismenge mit den aufgefundenen Zwillingsdateien der Treffermenge verknüpft sind.

Die Erfindung wird nachfolgend anhand von zwei Ausführungsbeispielen mithilfe von mehreren Figuren veranschaulicht. Es zeigen
- Fig. 1: eine Gesamtübersicht einer erfindungsgemäßen Plattform zum Durchsuchen von Dokumenten,
- Fig. 2A: eine vereinfachte Darstellung einer Treffermenge eines Suchvorgangs der Plattform aus Fig. 1,
- Fig. 2B: eine durch Reduktion aus der Treffermenge von Fig. 2A erzeugte Ergebnismenge eines ersten Ausführungsbeispiels,
- Fig. 2C: eine durch Reduktion aus der Treffermenge von Fig. 2A erzeugte Ergebnismenge eines zweiten Ausführungsbeispiels,
- Fig. 3A: ein symbolisierter Ablauf einer Dokumentenfreigabe des ersten Ausführungsbeispiels mit einer Ergebnismenge gemäß Fig. 2B und
- Fig. 3B: ein symbolisierter Ablauf einer Dokumentenfreigabe gemäß dem zweiten Ausführungsbeispiel aus Fig. 2C.

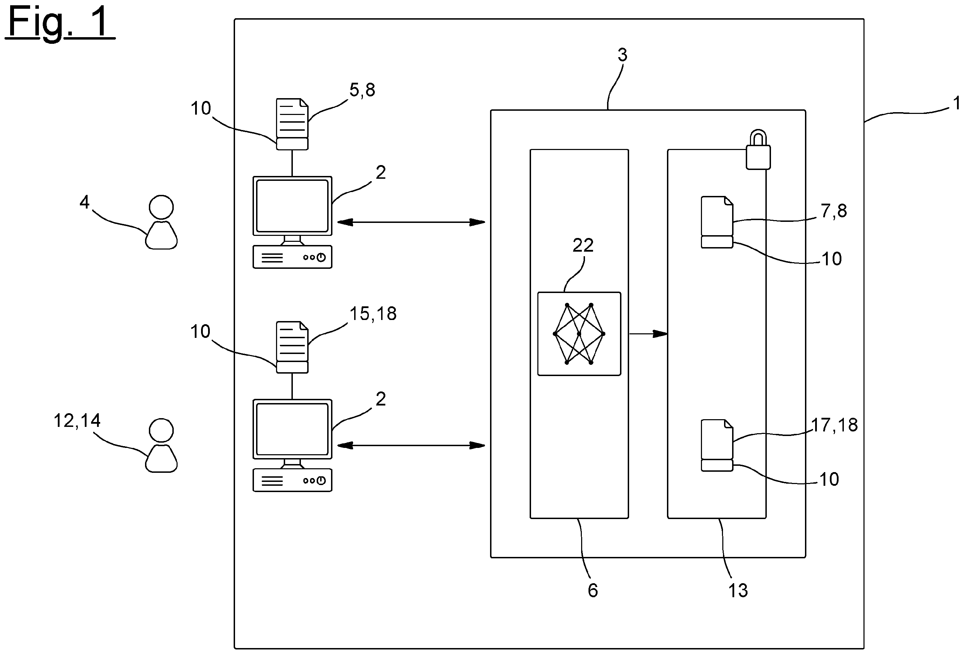

Figur 1 zeigt ein System zum Durchsuchen von Dokumenten mit einer elektronischen Plattform 1, welche mehrere Clients 2 sowie einen Server 3 umfasst. Die Plattform 1 kann beispielsweise in einer Ermittlungsbehörde oder in mehreren, miteinander vernetzten Ermittlungsbehörden mit einer Mehrzahl an Standorten eingesetzt werden. In diesem Ausführungsbeispiel haben lediglich bestimmte Nutzer 4, 14 bzw. Mitarbeiter eine Zugangsberechtigung für die Nutzung bzw. für den Zugang zu der Plattform 1. Im vorliegenden Ausführungsbeispiel ist einem Nutzer 4 ein Client 2 bzw. ein Arbeitsplatzrechner zugeordnet. Ferner ist einem weiteren Nutzer 14 ebenfalls ein Client 2 bzw. Arbeitsplatzrechner zugeordnet.

Im vorliegenden Ausführungsbeispiel arbeiten die Nutzer 4 und der weitere Nutzer 14 im Bereich geheimdienstlicher Ermittlungen, wozu ein digitales Aktensystem mit einer Vielzahl an Ermittlungsakten besteht. Jeder Ermittlungsakte sind typischerweise eine Vielzahl an Arbeitsdokumenten 5, 15 zugeordnet, welche jeweils einen Text aufweisen. Die Arbeitsdokumente 5, 15 sind vorzugsweise in menschenlesbaren Dateiformaten, beispielsweise in Word-, PDF-, oder RTF-Dateiformaten, gespeichert. Das jeweilige Arbeitsdokument 5, 15 kann allerdings auch ein Foto mit eingeblendetem Text oder mit unsichtbarem, hinterlegtem Text sein. Die Arbeitsdokumente 5, 15 können außerdem auch Audiodateien, beispielsweise Zeugenvernehmungen, sein. Es ist möglich, dass die Audiodateien neben Tonspuren zusätzlich noch Text in Form der jeweiligen transkribierten Tonspur aufweisen. Den Arbeitsdokumenten 5, 15 ist vorzugsweise gemein, dass sie einen durchsuchbaren Text enthalten.

Es ist bevorzugt, dass der Nutzer 4 über ein ihm zugeordnetes, individuelles, geschütztes Nutzerkonto im Rahmen der Plattform 1 zur Nutzung der Plattform 1 verwenden kann. Das Nutzerkonto kann beispielsweise passwort- und/oder biometrisch geschützt sein. In dem Nutzerkonto des Nutzers 4 kann insbesondere eine Nutzerrolle des Nutzers 4 hinterlegt sein. Die Nutzerrolle 4 gibt vorzugsweise die Hierarchieebene wieder, in welcher sich der jeweilige Nutzer 4 innerhalb der Ermittlungsbehörde befindet. Es ist bevorzugt, dass einem Nutzer 4 bzw. einem Nutzerkonto mit einer, einer hohen Hierarchieebene zugeordneten Nutzerrolle eine relativ umfassende Zugriffsberechtigung auf die Arbeitsdokumente 5, 15 zugewiesen wird.

Im vorliegenden Ausführungsbeispiel werden innerhalb der Ermittlungsbehörden die Ermittlungsakten bzw. die dazugehörigen Arbeitsdokumente 5, 15 in unterschiedliche Geheimhaltungsgrade eingestuft. Ein Beispiel mögen die in Behörden üblichen Geheimhaltungsgrade "streng geheim", "geheim", "Verschlusssache - vertraulich" und "Verschlusssache - nur für den Dienstgebrauch" sein.

Je nach Nutzerrolle haben der Nutzer 4 bzw. die weitere Nutzer 14 eine Zugriffsberechtigung auf die Arbeitsdokumente 5, 15, wobei die Zugriffsberechtigung zugleich auch von dem jeweiligen Geheimhaltungsgrad des Arbeitsdokumentes 5, 15 abhängen kann. Beispielsweise kann die Plattform 1 so eingerichtet sein, dass alle Nutzer 4, 14 eine Zugriffsberechtigung auf Arbeitsdokumente 5, 15 des Geheimhaltungsgrades "Verschlusssache - nur für den Dienstgebrauch" haben. Demgegenüber kann die Plattform 1 so ausgebildet sein, dass nur einige wenige Nutzer 4 Zugriff auf Arbeitsdokumente 5, 15 des Geheimhaltungsgrades "streng geheim" haben.

In Fig. 1 ist die beispielhafte Situation abgebildet, dass der Nutzer 4 aufgrund seiner Ermittlungstätigkeit eine Zugriffsberechtigung für ein Arbeitsdokument 5 aus einer seiner Ermittlungsakten besitzt. Ebenso hat der weitere Nutzer 14 aufgrund seiner Ermittlungstätigkeit eine Zugriffsberechtigung für ein weiteres Arbeitsdokument 15 aus einer der Ermittlungsakten des weiteren Nutzers 14. Die beiden Arbeitsdokumente 5, 15 weisen jeweils einen solchen Geheimhaltungsgrad auf, dass der Nutzer 4 keine pauschale Zugriffsberechtigung für das weitere Arbeitsdokument 15 hat. Ebenso besitzt der weitere Nutzer 14 keine pauschale Zugriffsberechtigung für das Arbeitsdokument 5. Im vorliegenden Ausführungsbeispiel ist das Arbeitsdokument 5 auf Client 2 gespeichert, welcher dem den Nutzer 4 zugeordnet ist. Das weitere Arbeitsdokument 15 ist vorzugsweise auf dem Client 2 gespeichert, welcher dem weiteren Nutzer 14 zugeordnet ist.

Ein häufiger Fall im vorliegenden Ausführungsbeispiel kann eine fallspezifische Zugriffsberechtigung eines bestimmten Nutzers 4, 14 auf bestimmte Arbeitsdokumente 5, 15 sein. Eine fallspezifische Zugriffsberechtigung kann z.B. dann vorliegen, wenn der Fortschritt der Ermittlungstätigkeit des Nutzers 4 das Geheimhaltungsinteresse am weiteren Arbeitsdokument 15 überwiegt.

Diese Interessensabwägung wird u.a. durch das Geheimhaltungsprinzip "Need-to-Know" ausgedrückt. Im Falle des Need-to-Know-Prinzips wird beabsichtigt, dem Nutzer 4 nur dann Einblick in das weitere Arbeitsdokument 15 des weiteren Nutzers 14 zu gewähren, wenn der Nutzer 4 diesen Einblick für seine Tätigkeit benötigt. Dabei kann es mehrere Abstufungen des Need-to-Know-Prinzips geben. Während es in einem ersten Fall noch zulässig ist, dass der Nutzer 4 wenigstens noch von der bloßen Existenz des weiteren Arbeitsdokumentes 15 erfährt, ist in einer zweiten Ausprägung des Need-to-Know-Prinzips noch nicht einmal das der Fall.

Darüber hinaus ist für die Ausgestaltung der Plattform noch das Need-to-Share-Prinzip zu berücksichtigen. Damit ist gemeint, dass innerhalb eines bestimmten Rahmens, beispielsweise innerhalb einer bestimmten Organisation, Behörde oder eines Behördenverbunds, möglichst viele Arbeitsdokumente 5, 15 - unter Einhaltung des Need-to-Know-Prinzips - geteilt werden können sollen. Das Need-to-Share-Prinzip ist daher keine Verpflichtung an den einzelnen Mitarbeiter zur Verschwiegenheit, sondern eine Obliegenheit der Organisation / der Behörde / des Unternehmens / des Behördenverbunds zur Bereitstellung von Werkzeugen zum Teilen von Arbeitsdokumenten 5, 15.

Dabei ist die bloße Verpflichtung zur Bereitstellung von Werkzeugen zum Teilen von Arbeitsdokumenten 5, 15 sehr einfach zu erfüllen, sofern keine Geheimhaltungspflicht daran geknüpft ist. Erst die zusätzliche Implementierung des Need-to-Know-Prinzips führt bei dem Need-to-Share-Prinzip zu einem gewissen Spannungsfeld. In der Praxis war bisher die gleichzeitige Implementierung von "Need-to-Know" und "Need-to-Share" kaum zu bewerkstelligen.

Insbesondere der fallspezifische Abwägungsprozess von Suchinteresse gegenüber Geheimhaltungsinteresse verletzt regelmäßig entweder das eine oder das andere Interesse über Gebühr. Regelmäßig kommt es beispielsweise vor, dass ein Nutzer 4 auf einer eher geringen Hierarchieebene und mit einer dementsprechenden Nutzerrolle im Falle der konkreten Ermittlungstätigkeit ein ausgesprochen hohes Suchinteresse vorzuweisen hat, sodass selbst das geheime oder sogar streng geheime Arbeitsdokument 5, 15 von diesem Nutzer 4 wenigstens in teilweise geschwärzter Fassung eingesehen können werden muss. Es ist daher nicht zweckmäßig, Nutzerrollen von eher geringer Hierarchieebene ausnahmslos von Arbeitsdokumenten 5, 15 mit hohem oder höchstem Geheimhaltungsgrad auszuschließen.

Umgekehrt gilt dies gleichermaßen, sodass durchaus auch Nutzerrollen mit hoher Hierarchieebene von Arbeitsdokumenten 5, 15 mit eher geringem Geheimhaltungsgrad auszuschließen sind. Schwierig ist dabei stets die aus der Interessenabwägung folgende Zugriffsentscheidung, welche möglichst trennscharf sein muss. Derartige Abwägungsprozesse können durchaus aufwendig sein, sodass die Suche von relevanten Arbeitsdokumenten 5, 15 möglichst treffsicher sein muss, um nicht zu viele Abwägungsprozesse zu provozieren.

Der Server der Plattform 3 umfasst gemäß Fig. 1 vorzugsweise eine Suchmaschine 6. Mit Vorteil weist die Suchmaschine 6 eine künstliche Intelligenz 22, vorteilhafterweise in Form eines neuronalen Netzes, auf. Es ist bevorzugt, dass die Suchmaschine eine Architektur aus dem Bereich des Natural Language Processings, insbesondere eine Transformer-Architektur, aufweist.

Zweckmäßigerweise umfasst die Plattform 1 bzw. der Server 3 einen Dokumententresor 13. Es ist bevorzugt, dass ausschließlich die Suchmaschine 6 in der Lage ist, auf den Dokumententresor 13 zuzugreifen. Es ist möglich, dass der Dokumententresor 13 auf mehreren Servern 3 verteilt angeordnet ist. Gemäß einer Ausführungsform befindet sich der Dokumententresor teilweise oder vollständig auf den Clients 2. Es ist sehr bevorzugt, dass der Dokumententresor in einer gesicherten Umgebung der Plattform 1 befindlich ist. Insbesondere kann der Dokumententresor 13, vorzugsweise homomorph, verschlüsselt sein.

Es ist sehr bevorzugt, dass der Dokumententresor eine Vielzahl an Zwillingsdateien 7, 17 umfasst. Mit Vorteil erstellt die Plattform 1 zu jedem Arbeitsdokument 5, 15 eine Zwillingsdatei 7, 17, sodass das Arbeitsdokument 5 gemeinsam mit der Zwillingsdatei 7 ein Dateipaar 8 bildet. Ebenso bildet das weitere Arbeitsdokument 15 gemeinsam mit einer weiteren Zwillingsdatei 17 ein weiteres Dokumentenpaar 18. Dabei ist jedes Arbeitsdokument 5, 15 mit der zugehörigen Zwillingsdatei 7, 17 verknüpft, sodass die Plattform 1 zu jeder Zwillingsdatei 7, 17 das dazugehörige Arbeitsdokument 5, 15 kennt.

In diesem Ausführungsbeispiel sind die Arbeitsdokumente 5, 15 ausschließlich auf den Clients befindlich, während die Zwillingsdateien 7, 17 ausschließlich in dem Dokumententresor 13 des Servers 3 angeordnet sind. Jedem Arbeitsdokument 5, 15 bzw. jeder Zwillingsdatei 7, 17 bzw. jedem Dateipaar 8, 18 (oder jeweils wenigstens einer Mehrzahl davon) sind vorzugsweise Metadaten 10 zugeordnet. Die Metadaten umfassen insbesondere einen Geheimhaltungsgrad und/oder ein übergreifendes Themengebiet und/oder Schlüsselbegriffe und/oder eine Änderungshistorie und/oder beteiligte Nutzer 4, 14.

Es ist sehr bevorzugt, dass bei der Erstellung oder Einbindung eines Arbeitsdokumentes 5, 15 eine Zwillingsdatei 7, 17 erstellt wird. Die Zwillingsdatei 7, 17 wird vorzugsweise durch Kopie des Arbeitsdokumentes 5, 15 mit nachfolgender Umwandlung erzeugt, sodass das Dateiformat der Zwillingsdatei 7, 17 vorzugsweise ein anderes ist als dasjenige des Arbeitsdokumentes 5, 15. Es ist sehr bevorzugt, dass das Dateiformat des Arbeitsdokumentes 5, 15 ein menschenlesbares Dateiformat ist. Beispiele für menschenlesbare Dateiformate 5, 15 sind etwa Microsoft-Word-Formate oder PDF-Formate. Es ist sehr bevorzugt, dass die Zwillingsdatei 7, 17 in einem nicht-menschenlesbaren Dateiformat abgespeichert wird. Vorzugsweise wird die Zwillingsdatei 7, 17 in einem lediglich maschinenlesbaren Dateiformat abgespeichert.

Gemäß einer besonders bevorzugten Ausführungsform ist die Umwandlung von der Kopie des Arbeitsdokumentes 5, 15 hin zur Zwillingsdatei 7, 17 mit einem Informationsverlust des Textes des jeweiligen Arbeitsdokumentes 5, 15 verbunden. Mit Vorteil ergibt eine Rückumwandlung der Zwillingsdateien 7, 17 aufgrund des Informationsverlustes während der Rückumwandlung einen für Mensch und Maschine unverständlichen Text. Es ist bevorzugt, dass der Text des Arbeitsdokumentes 5, 15 aus den Zwillingsdateien 7, 17 - selbst unter Kenntnis sämtlicher Geheimnisse und damit zur Fähigkeit der vollständigen Entschlüsselung - nicht rekonstruierbar ist. Im Ergebnis ist vorzugsweise sogar die erfolgreiche Ausleitung und Entschlüsselung des Dokumententresors 13 für Dritte nicht auswertbar.

Es ist bevorzugt, dass die Zwillingsdateien 7, 17 von der Suchmaschine 6 durchsuchbar sind. Beispielsweise kann die Häufigkeit von Suchbegriffen in einer Zwillingsdatei 7, 17 durch die Suchmaschine 6 festgestellt werden. Mit Vorteil stellen die Zwillingsdateien 7, 17 eine mathematische Repräsentation der Arbeitsdokumente 5, 15 dar. Es ist ganz besonders bevorzugt, dass einige, viele oder alle Wörter eines/des Arbeitsdokumentes 5, 15 durch Vektorrepräsentationen in der Zwillingsdatei 7, 17 dargestellt werden.

Selbst wenn alle Wörter als Vektorrepräsentation dargestellt werden, kann immer noch ein Informationsverlust erreicht werden, indem die Reihenfolge der Wörter des Textes des Arbeitsdokumentes 5, 15 - beispielsweise durch die Bag-of-Words-Methode - vernichtet wird. Bei der Bag-of-Words-Methode werden einzelne Wörter über einen Vektor repräsentiert und gleichzeitig gemäß Worthäufigkeit sortiert. Dies kann graphisch zum Beispiel in sogenannten Wortwolken dargestellt werden, bei denen die häufig vorkommenden Wörter größer dargestellt werden. An diesen Wortwolken wird der Informationsverlust in Form des Verlustes der Satzstruktur gut deutlich, während gleichzeitig nachvollziehbar ist, dass die Zwillingsdateien 7, 17 gemäß dem Bag-of-Words-Modell gut durchsuchbar sind. Neben dem Bag-of-Words-Modell existieren noch zahlreiche andere Möglichkeiten der durchsuchbaren Textrepräsentation bei gleichzeitigem Informationsverlust.

Der Nutzer 4 möchte im vorliegenden Ausführungsbeispiel im Falle einer seiner Ermittlungsakten recherchieren, ob weitere, für seine Ermittlungstätigkeit relevante Arbeitsdokumente 15 existieren. Hierzu richtet er eine Suchanfrage 20 auf seinem Nutzerkonto des Clients 2 an den Server 3 bzw. an die Suchmaschine 6. Die Suchmaschine 6 ist vorzugsweise in der Lage, eine Kontextsuche durchzuführen. Beispielsweise kann die Suchmaschine 6 die Frage "Wo war Person X letztes Jahr auf öffentlichen Veranstaltungen?" jedenfalls insoweit verstehen, als dass die Suchmaschine 6 mit passenden Suchtreffern auf die Suchanfrage 20 antwortet.

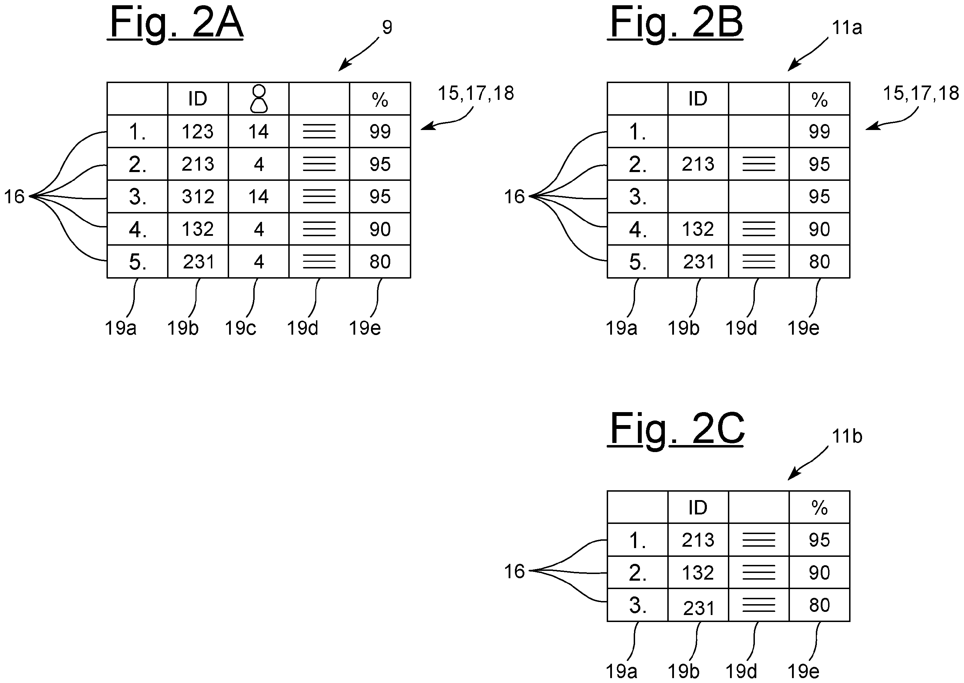

Daraufhin durchsucht die Suchmaschine 6 die Zwillingsdateien 7, 17 im Dokumententresor 13 und ermittelt eine in Fig. 2A dargestellte Treffermenge 9, welche vorzugsweise in Listenform zusammengefasst ist. Die Treffermenge 9 ist nicht für den Nutzer 4 einsehbar und umfasst in dem hier gewählten Ausführungsbeispiel insgesamt fünf Suchtreffer, welche vorzugsweise nach Relevanz absteigend sortiert sind. Es ist bevorzugt, dass die einzelnen Suchtreffer der Treffermenge 9 jeweils in einer Zeile 16 angeordnet sind.

Die Treffermenge 9 kann mehrere Spalten, beispielsweise Spalten 19a bis 19e, aufweisen. Es ist bevorzugt, dass eine erste Spalte 19a eine laufende Nummer des jeweiligen Suchtreffers wiedergibt. Eine zweite Spalte 19b kann eine Identifikationsnummer des jeweiligen Dokumentes anzeigen. Eine dritte Spalte 19c kann einen zugriffsberechtigten Nutzer 4, 14 des jeweiligen Arbeitsdokumentes 5, 15 anzeigen. Eine vierte Spalte 19d kann erläuternden Text, beispielsweise einen Dokumententitel, einen Geheimhaltungsgrad, eine Länge des Dokumentes, ein Alter des Dokumentes, eine Änderungshistorie, weitere am Arbeitsdokument beteiligte Personen und/oder eine Dokumentenzusammenfassung anzeigen. Es ist sehr bevorzugt, dass eine oder mehrere der Spalten 19b bis 19d Metadaten 10 der jeweiligen Arbeitsdokumente 5, 15 anzeigen. Demgegenüber können eine oder mehrere Spalten 19a, 19e Suchdaten, (laufende Treffernummer bzw. Relevanz) anzeigen.

Es ist ganz besonders bevorzugt, dass die Plattform 1 bzw. der Client 2 dem Nutzer 4 stattdessen eine Ergebnismenge 11a, 11b anzeigt, s. Fig. 2B bzw. Fig. 2C. Gemäß einem ersten Ausführungsbeispiel in Fig. 2B wird dem Nutzer 4 als Ergebnis auf seine Suchanfrage 20 eine Ergebnismenge 11a angezeigt. Es ist von Vorteil, dass die Ergebnismenge 11a dem Nutzer 4 in Listenform dargestellt wird.

Im Falle der Ergebnismenge 11a erfährt der Nutzer 4, dass insgesamt fünf Treffer zu seiner Suchanfrage aufgefunden wurden, wobei ihm die Treffer 2., 4. und 5. mit der jeweiligen Identifikationsnummer "ID" des Dokuments und weiteren, zugehörigen Metadaten 10 in Spalte 19d gezeigt werden. Im Falle dieser drei Arbeitsdokumente 5, 15 ist jeweils der Nutzer 4 zugriffsberechtigt.

Darüber hinaus erfährt der Nutzer 4 aus der Ergebnismenge 11a, dass zwei weitere Treffer, nämlich die Treffer 1. und 3., existieren. Dabei ist der Treffer 1. mit einer Suchrelevanz von 99 % charakterisiert und begründet daher ein besonders großes Suchinteresse. Zu dem Treffer 1. hat der Nutzer 4 keine Zugriffsberechtigung, sodass er außer der Existenz des Treffers 1. und der hohen Relevanz von 99 % im vorliegenden Ausführungsbeispiel gemäß Fig. 2B nichts weiter über dieses weitere Arbeitsdokument 15 erfährt.

Auch der Treffer 3. weist in der Ergebnismenge 11a von Fig. 2B eine relativ hohe Relevanz von 95 % auf und auch für dieses weitere Arbeitsdokument 15 besitzt nicht der Nutzer 4, sondern der weitere Nutzer 14 eine Zugriffsberechtigung. Dabei wurde in der Ergebnismenge 11a die Spalte 19c aus der Treffermenge 9 vollständig ausgeblendet, damit der Nutzer 4 nicht von dem weiteren Nutzer 14 erfährt. Folglich wurde die Anonymität des weiteren Nutzers 14 über die Ausgestaltung der Ergebnismenge 11a gewahrt.

Gemäß einem zweiten Ausführungsbeispiel nach Fig. 2C wird dem Nutzer 4 nicht die Ergebnismenge 11a, sondern eine weiter reduzierte Ergebnismenge 11b gezeigt, die noch weniger Informationen als die Ergebnismenge 11a offenbart. Denn im Fall des Ausführungsbeispiels nach Fig. 2C bleiben die Treffer 1. und 3. der Treffermenge 9 für den Nutzer 4 unsichtbar. In der Folge erhält der Nutzer 4 gemäß dem Ausführungsbeispiel nach Fig. 2C zunächst nur von solchen Arbeitsdokumenten 5 Kenntnis, auf welche er bereits Zugriffsrechte hat.

In der Ergebnismenge 11b kann es sich bei den drei Treffern um Arbeitsdokumente 5 handeln, welche entweder in die Aktenverantwortlichkeit des Nutzers 4 fallen und einen durchaus hohen Geheimhaltungsgrad besitzen können. Außerdem kann es sich bei den Treffern der Ergebnismenge 11b auch um solche Arbeitsdokumente 5 handeln, welche in die Aktenverantwortlichkeit weiterer Nutzer 14 fallen, gleichzeitig aber einen sehr niedrigen Geheimhaltungsgrad aufweisen und deshalb eine fallspezifische Abwägung des Suchinteresses mit dem Geheimhaltungsinteresse bei diesen Dokumenten niemals erforderlich ist.

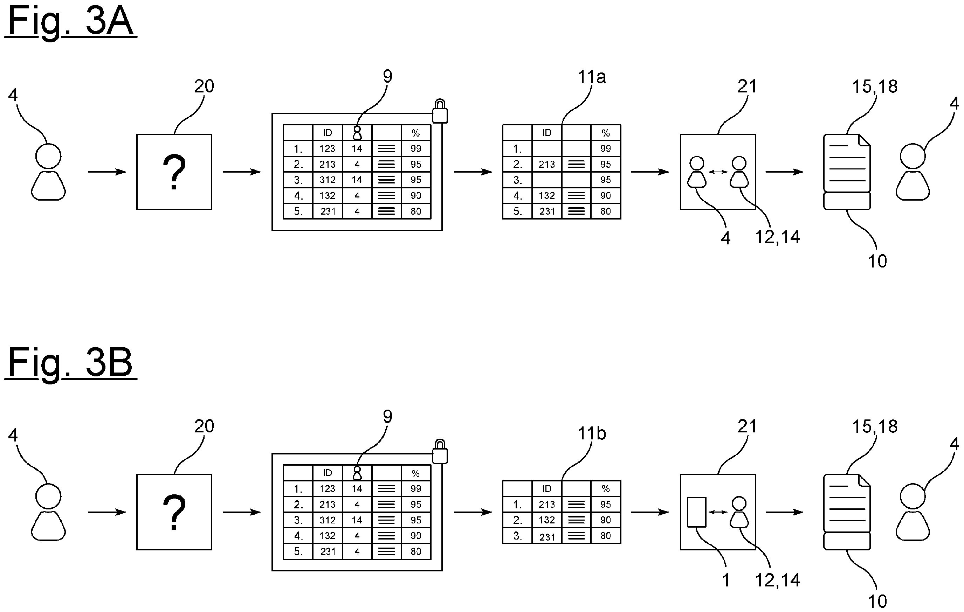

In Figur 3A findet sich ein vereinfachter Ablauf des Prozesses innerhalb der Plattform 1, sobald der Nutzer 4 eine Suchanfrage 20 gestellt hat. In der Folge erzeugt die Plattform 1 die Treffermenge 9 aus Fig. 2A, welche für den Nutzer 4 nicht einsehbar und was durch das Schloss symbolisiert ist. Stattdessen erhält der Nutzer 4 in diesem Ausführungsbeispiel die Ergebnismenge 11a aus Fig. 2B.

Der Nutzer 4 hat nun beispielsweise die Möglichkeit, auf die erste Zeile der Ergebnismenge 11a zu klicken, um eine Zugriffsentscheidung 21 herbeizuführen. Im Ausführungsbeispiel der Fig. 3A besteht der Schritt der Zugriffsentscheidung 21 darin, dass sich nach dem Anklicken ein Fenster zur Durchführung eines anonymisierten Chats öffnet. Hier kann der Nutzer 4 anonym mit dem weiteren Nutzer 14 in Kontakt treten, welcher ebenfalls anonym in diesem Chat bleibt. Im vorliegenden Ausführungsbeispiel ist der weitere Nutzer 14 der Aktenverantwortliche des weiteren Arbeitsdokuments 15, welches den Treffer 1. aus der Treffermenge 9 darstellt. Folglich ist der weitere Nutzer 14 zugleich ein Zugriffsberechtigter 12 des Treffers 1. der Treffermenge 9.

Der Nutzer 4 und der weitere Nutzer 14 bzw. Zugriffsberechtigte 12 können nun miteinander das Suchinteresse gegenüber dem Geheimhaltungsinteresse in dem anonymisierten Chat abwägen. Die Anonymisierung dient dabei einer möglichst objektiven Abwägung, sodass es dem Zugriffsberechtigten 12 leichter fällt, dem Nutzer 4 den Zugriff auf das Arbeitsdokument 15 des Treffens 1. der Ergebnismenge 11a bzw. der Treffermenge 9 zu verweigern. Darüber hinaus hat der Chat den besonderen Vorteil, dass die beiden Beteiligten 4, 12, 14 abwägen können, welche Bereiche des weiteren Arbeitsdokumentes 15 zu schwärzen sind. In Fig. 3A erhält der Nutzer 4 nach der positiven Zugriffsentscheidung 21 schließlich einen - wie auch immer gearteten - Zugriff auf das weitere Arbeitsdokument 15 bzw. den Treffer 1. der Ergebnismenge 11a.

Im Falle des Ausführungsbeispiels nach Fig. 3B erstellt die Plattform 1 bzw. die Suchmaschine 6 ebenfalls eine Treffermenge 9, welche für den Nutzer 4 nicht einsehbar ist. Im Unterschied zum Ausführungsbeispiel nach Fig. 3A jedoch erhält der Nutzer 4 nicht etwa die Ergebnismenge 11a, sondern die Ergebnismenge 11b aus Fig. 2C. Folglich erfährt der Nutzer 4 gar nicht erst von den Treffern 1. und 3. aus der Treffermenge 9 von Fig. 2A. Stattdessen sendet die Plattform 1 im Rahmen des Schritts der Zugriffsentscheidung 21 eine Nachricht an den weiteren Nutzer 14 und informiert diesen über ein Suchinteresse.

Dabei wird dem weiteren Nutzer 14 vorzugsweise die Suchrelevanz von 99 % mitgeteilt. Es ist von Vorteil, dass der Nutzer 4 bei der Erstellung seiner Suchanfrage 20 außerdem bestimmte Rahmendaten anzugeben hat. Hierzu kann beispielsweise die Angabe des Geheimhaltungsgrades der Akte gehören, zu der der Nutzer 4 die Suchanfrage 20 erstellt hat. Hierzu kann außerdem die grob umrissene Tätigkeit vom Nutzer 4 bei der Erstellung der Suchanfrage 20 erwähnt werden (müssen). Anhand dieser Rahmendaten und der Suchrelevanz kann der weitere Nutzer 14 bzw. Zugriffsberechtigte 12 die Abwägung von Suchinteresse und Geheimhaltungsinteresse u.U. selbständig vornehmen. Daraufhin gewährt der Zugriffsberechtigte 12, 14 dem Nutzer 4 im positiven Fall einen Zugriff auf das Arbeitsdokument 15 bzw. den Treffer 1. der Treffermenge 9.

Es kann passieren, dass der Zugriffsberechtigte 12, 14 aufgrund der von der Plattform 1 übermittelten Nachricht des Suchinteresses und/oder anhand der vom Nutzer 4 angegebenen Rahmendaten noch keine abschließende Zugriffsentscheidung 21 treffen kann. Dann kann vorzugsweise und in einem weiteren, hier nicht dargestellten Ausführungsbeispiel im Rahmen der Zugriffsentscheidung 21 nach der Nachricht der Plattform 1 an den Zugriffsberechtigten 12 auch noch vom Zugriffsberechtigten 12, 14 ein anonymisierter Chat mit dem Nutzer 4 gestartet werden.

**Bezugszeichenliste**

| | |
|---|---|
| Plattform | 1 |
| Client | 2 |
| Server | 3 |
| Nutzer | 4 |
| Arbeitsdokument | 5 |
| Suchmaschine | 6 |
| Zwillingsdatei | 7 |
| Dateipaar | 8 |
| Treffermenge | 9 |
| Metadaten | 10 |
| Ergebnismenge | 11a, 11b |
| Zugriffsberechtigter | 12 |
| Dokumententresor | 13 |
| Weiterer Nutzer | 14 |
| Weiteres Arbeitsdokument | 15 |
| Zeile | 16 |
| Weitere Zwillingsdatei | 17 |
| Weiteres Dateipaar | 18 |
| Spalte | 19a-e |
| Suchanfrage | 20 |
| Zugriffsentscheidung | 21 |
| Künstliche Intelligenz | 22 |

## Patentansprüche

1. Verfahren zum Durchsuchen von sensiblen Dokumenten, wobei eine elektronische Plattform (1) mehrere Clients (2) und vorzugsweise wenigstens einen Server (3) umfasst, wobei die Nutzung der Plattform (1) eine Zugangsberechtigung für Nutzer (4) erfordert, wobei die Plattform (1) Zugriff auf eine Menge an Dateien (5, 7, 15, 17) besitzt bzw. ermöglicht, wobei Text enthaltende Arbeitsdokumente (5, 15) im Rahmen der Plattform (1) erstellt bzw. in die Plattform (1) eingebunden werden und dann Bestandteil der Menge an Dateien (5, 7, 15, 17) werden, wobei die Arbeitsdokumente (5, 15) in einem menschenlesbaren Dateiformat gespeichert werden, wobei im Rahmen der Plattform (1) eine Suchanfrage (20) eines Nutzers (4) an eine Suchmaschine (6) der Plattform (1) übermittelt wird und einen Suchvorgang der Suchmaschine (6) auslöst, wobei die Suchmaschine (6) Zugriff auf wenigstens eine Teilmenge der Menge an Dateien (5, 7, 15, 17) hat,
**dadurch gekennzeichnet, dass**
die Arbeitsdokumente (5, 15) im Rahmen der Plattform (1) automatisch jeweils wenigstens teilweise kopiert und umgewandelt werden und die umgewandelten Kopien Zwillingsdateien (7, 17) darstellen, wobei die Plattform (1) jedes Arbeitsdokument (5, 15) mit der entsprechenden Zwillingsdatei (7, 17) verknüpft, wobei das jeweilige Arbeitsdokument (5, 15) und die mit dem Arbeitsdokument (5, 15) verknüpfte Zwillingsdatei (7, 17) ein Dateipaar (8, 18) bilden,
wobei die Suchmaschine (6) während des Suchvorgangs (20) - insbesondere lediglich - auf wenigstens einen Teil der Zwillingsdateien (7, 17) zugreift und den Inhalt der Zwillingsdateien (7, 17) zur Erfüllung der Suchanfrage (20) durchsucht, wobei die Suchmaschine (6) eine auf aufgefundenen Zwillingsdateien (7, 17) beruhende Treffermenge (9) - vorzugsweise in Form einer Trefferliste - erstellt, wobei dem Nutzer (4) eine Ergebnismenge (11a, 11b) - vorzugsweise in Form einer Ergebnisliste - angezeigt wird, wobei die Ergebnismenge (11a, 11b) Arbeitsdokumente (5, 15) abbildet, wobei die abgebildeten Arbeitsdokumente (5, 15) der Ergebnismenge (11a, 11b) mit den aufgefundenen Zwillingsdateien (7, 17) der Treffermenge (9) verknüpft sind.

2. Verfahren nach Anspruch 1, wobei die Plattform (1) die Zwillingsdateien (7, 17) der Treffermenge (9) mit einer Zugriffsberechtigung des Nutzers (4) abgleicht, wobei die Ergebnismenge (11a, 11b) dem Nutzer (4) diejenigen Informationen aus der Treffermenge (9) vorenthält, zu denen der Nutzer (4) keine Zugriffsberechtigung besitzt.

3. Verfahren nach Anspruch 1 oder 2, wobei ein bezüglich der vorenthaltenen Informationen Zugriffsberechtigter (12) und/oder die Plattform (1) eine Zugriffsentscheidung (21) treffen muss, ob dem Nutzer (4) der Zugriff auf einige oder alle der vorenthaltenen Informationen bzw. auf einige oder alle der Informationen der Treffermenge (9) gewährt wird.

4. Verfahren nach einem der Ansprüche 1 bis 3, wobei die Zwillingsdateien (7, 17) in einem nur maschinenlesbaren Dateiformat gespeichert werden, wobei vorzugsweise der Text eines Arbeitsdokuments (5, 15) aus der dazugehörigen Zwillingsdatei (7, 17) heraus nicht vollständig rekonstruierbar ist, wobei bevorzugt ist, dass die Umwandlung von der Kopie des Arbeitsdokuments (5, 15) hin zur Zwillingsdatei (7, 17) mit einem wenigstens teilweisen Informationsverlust des Textes des Arbeitsdokuments (5, 15) verbunden ist.

5. Verfahren nach einem der Ansprüche 1 bis 4, wobei die Suchmaschine (6) eine künstliche Intelligenz (22) - insbesondere in Form eines neuronalen Netzes - umfasst und vorzugsweise dazu ausgebildet ist, Kontextsuchen durchzuführen.

6. Verfahren nach einem der Ansprüche 1 bis 5, wobei den Arbeitsdokumenten (5, 15) und/oder den Zwillingsdateien (7, 17) bzw. den Dateipaaren (8, 18) Metadaten (10) zugeordnet sind, wobei bevorzugt ist, dass die Metadaten (10) einen Geheimhaltungsgrad des Arbeitsdokuments (5, 15) bzw. der Zwillingsdatei (7) umfassen.

7. Verfahren nach einem der Ansprüche 1 bis 6, wobei wenigstens eine Untermenge der Zwillingsdateien (7, 17) in einem Dokumententresor (13) gespeichert ist, wobei der Dokumententresor (13) im Vergleich zu anderen Speicherbereichen durch wenigstens einen weiteren Schutzmechanismus geschützt ist, wobei vorzugsweise wenigstens ein Teil des Dokumententresors (13) Speicherbereiche des Servers (3) nutzt.

8. Verfahren nach einem der Ansprüche 1 bis 7, wobei wenigstens einige der Arbeitsdokumente (5, 15) dezentral, insbesondere auf einem dem Nutzer (4) zugewiesenen Client (2), gespeichert werden.

9. Verfahren nach einem der Ansprüche 1 bis 8, wobei die Verknüpfung eines Arbeitsdokuments (5, 15) mit einer dazugehörigen Zwillingsdatei (7, 17) mittels Indexierung, beispielsweise mit Hilfe einer fortlaufenden Indexnummer, vorgenommen wird.

10. System zum Durchsuchen von sensiblen Dokumenten, wobei das System eine elektronische Plattform (1) umfasst, wobei die Plattform (1) mehrere Clients (2) und vorzugsweise wenigstens einen Server (3) aufweist, wobei das System so ausgebildet ist, dass die Nutzung der Plattform (1) eine Zugangsberechtigung für Nutzer (4) erfordert, wobei die Plattform (1) Zugriff auf eine Menge an Dateien (5, 7, 15, 17) besitzt bzw. ermöglicht, wobei Text enthaltende Arbeitsdokumente (5, 15) im Rahmen der Plattform (1) erstellbar bzw. in die Plattform (1) einbindbar sind und dann Bestandteil der Menge an Dateien (5, 7, 15, 17) sind, wobei die Arbeitsdokumente (5, 15) in einem menschenlesbaren Dateiformat gespeichert werden, wobei im Rahmen der Plattform (1) eine Suchanfrage (20) eines Nutzers (4) an eine Suchmaschine (6) der Plattform (1) übermittelbar ist und einen Suchvorgang der Suchmaschine (6) auslöst, wobei die Suchmaschine (6) Zugriff auf wenigstens eine Teilmenge der Menge an Dateien (5, 7, 15, 17) hat,
**dadurch gekennzeichnet, dass**
das System so ausgebildet ist, dass die Arbeitsdokumente (5, 15) im Rahmen der Plattform (1) automatisch jeweils wenigstens teilweise kopiert und umgewandelt werden und die umgewandelten Kopien Zwillingsdateien (7, 17) darstellen, wobei die Plattform (1) jedes Arbeitsdokument (5, 15) mit der entsprechenden Zwillingsdatei (7, 17) verknüpft, wobei das jeweilige Arbeitsdokument (5, 15) und die mit dem Arbeitsdokument (5, 15) verknüpfte Zwillingsdatei (7, 17) ein Dateipaar (8, 18) bilden, wobei die Suchmaschine (6) während des Suchvorgangs - insbesondere lediglich - auf wenigstens einen Teil der Zwillingsdateien (7, 17) zugreift und den Inhalt der Zwillingsdateien (7, 17) zur Erfüllung der Suchanfrage (20) durchsucht, wobei die Suchmaschine (6) eine auf aufgefundenen Zwillingsdateien (7, 17) beruhende Treffermenge (9) - vorzugsweise in Form einer Trefferliste - erstellt, wobei dem Nutzer (4) eine Ergebnismenge (11a, 11b) - vorzugsweise in Form einer Ergebnisliste - angezeigt wird, wobei die Ergebnismenge (11a, 11b) Arbeitsdokumente (5, 15) abbildet, wobei die abgebildeten Arbeitsdokumente (5, 15) der Ergebnismenge (11a, 11b) mit den aufgefundenen Zwillingsdateien (7, 17) der Treffermenge (9) verknüpft sind.
